# EUROPÄISCHE PATENTSCHRIFT

(11) **EP 0 979 491 B1**
(45) Veröffentlichungstag und Bekanntmachung des Hinweises auf die Patenterteilung: **18.07.2001**
(21) Anmeldenummer: 98925502.1
(22) Anmeldetag: 29.04.1998
(51) Int. Cl.: G06K 19/14

(54) **VORRICHTUNG ZUR DETEKTION VON EIGENSCHAFTEN EINES BLATTGUTS**
DEVICE FOR DETECTING THE PROPERTIES OF A LEAF-SHAPED ARTICLE
DISPOSITIF POUR DETECTER LES PROPRIETES D'OBJETS EN FORME DE FEUILLE

(30) Priorität: 29.04.1997 DE 19718122
(43) Veröffentlichungstag der Anmeldung: 16.02.2000
(73) Patentinhaber: Giesecke & Devrient GmbH, 81677 München (DE)
(72) Erfinder: WUNDERER, Bernd, D-80805 München (DE)
(74) Vertreter: Klunker . Schmitt-Nilson . Hirsch
(86) Internationale Anmeldenummer: EP9802539
(87) Internationale Veröffentlichungsnummer: WO9849651

(56) Entgegenhaltungen:
- WO-A-94/22104
- GB-A- 1 601 362
- US-A- 5 299 268

## Beschreibung

Die Erfindung betrifft eine Vorrichtung zur Detektion von Eigenschaften eines Blattguts, wie z.B. Banknoten oder Wertpapieren, durch reflektiertes Licht gemäß dem Oberbegriff des Hauptanspruchs.

Aus der EP-OS 0 537 531, der DE-OS 38 15 375 und der DE-OS 195 32 877 sind Vorrichtungen bekannt, bei denen das Blattgut entlang einer Transportrichtung an einer Beleuchtungseinrichtung und einer Detektionseinrichtung vorbeitransportiert wird. Die Beleuchtungseinrichtung beleuchtet das Blattgut entlang einer Linie senkrecht zur Transportrichtung. Das vom Blattgut entlang der Linie reflektierte Licht wird von einer Detektionseinrichtung detektiert. Diese enthält entweder ein CCD-Array oder ein Fotodioden-Array, durch deren Ausgestaltung und Anordnung die örtliche Auflösung des reflektierten Lichts entlang der Linie bestimmt wird. Im Allgemeinen wird die Linie breiter als die Breite des Blattguts senkrecht zur Transportrichtung gewählt, so dass beim Vorbeitransport die gesamte Fläche des Blattguts detektiert werden kann.

Mit den oben genannten Vorrichtungen lässt sich speziell diffus reflektiertes Licht gut detektieren. Enthält das Blattgut jedoch spiegelnd reflektierende Bestandteile, wie z.B. metallisch glänzende Sicherheitsfäden oder Druckfarben oder in das Blattgut eingebrachte Bestandteile oder sogenannte OVDs, so lassen sich diese nicht in allen Fällen von den diffus reflektierenden Bereichen des Blattguts unterscheiden, insbesondere wenn ihr Reflexionsvermögen nicht sehr groß ist.

Die US-PS 5,299,268 zeigt eine Vorrichtung analog zu den oben beschriebenen Vorrichtungen, bei der zusätzlich das Blattgut entlang einer zweiten Linie senkrecht zur Transportrichtung beleuchtet wird. Durch die Bildung geeigneter Intensitätsverhältnisse der entlang der beiden Linien detektierten Lichtintensitäten können spiegelnd reflektierende Bestandteile des Blattguts detektiert werden.

Nachteilig bei dieser Vorrichtung ist, daß zur Detektion spiegelnd reflektierender Bestandteile des Blattguts zum einen ein relativ großer apparativer Aufwand und zum anderen ein relativ kompliziertes Auswerteverfahren notwendig ist. Zudem können mit keiner dieser Vorrichtungen magnetische Materialeigenschaften der Bestandteile des Blattguts abgeleitet werden.

Aus der GB-A-1 601 362 ist eine Vorrichtung zur Detektion von Sicherheitselementen in Blattgut bekannt, wobei das Sicherheitselement ein Muster aus glänzend metallischen magnetischen Bereichen mit unterschiedlicher Koerzitivkraft sein kann. Die Bereiche werden mit schräg einfallendem Licht beleuchtet, und das unter einem entsprechenden Ausfallswinkel direkt reflektierte Licht wird mit einer Detektionsvorrichtung detektiert. Durch Ausnutzung des magneto-optischen Kerr-Effekts läßt sich anhand der Intensität des detektierten Lichts feststellen, welche Koerzitivkraft bzw. welches Material an der detektierten Stelle vorliegt. Mit dieser Vorrichtung ist es allerdings nicht möglich, das Blattgut entlang einer Linie über die gesamte Blattgutbreite zu beleuchten und zu detektieren.

Der Erfindung liegt die Aufgabe zugrunde, eine Vorrichtung zur Detektion von Eigenschaften eines Blattguts entlang einer Linie mit spiegelnd reflektiertem Licht vorzuschlagen, die einfach aufgebaut ist und bei der bevorzugt auch magnetische Eigenschaften der Bestandteile des Blattguts abgeleitet werden können.

Erfindungsgemäß wird die Aufgabe durch die im Hauptanspruch angegebenen Merkmale gelöst. Vorteilhafte Weiterbildungen sind Gegenstand der Unteransprüche.

Der Grundgedanke der Erfindung besteht darin, eine Abbildungseinrichtung vorzusehen, die das von einer Beleuchtungseinrichtung emittierte Licht in ein im wesentlichen paralleles Lichtbündel umwandelt, das eine Linie in einer Linienebene parallel zum Blattgut beleuchtet und in einer ersten Beleuchtungsebene unter einem festen Einfallswinkel einfällt, wobei die erste Beleuchtungsebene mit der Linienebene einen ersten Beleuchtungswinkel bildet und die Linienebene entlang der Linie schneidet. Diese Abbildungseinrichtung ist möglichst nahe an der Linie angeordnet. Das entlang der Linie in einer ersten Detektionsebene unter einem festen Ausfallswinkel reflektierte Licht wird auf eine Detektionseinrichtung abgebildet, wobei die Detektionsebene mit dem Blattgut einen ersten Detektionswinkel bildet und die Linienebene entlang der Linie schneidet. Der Einfallswinkel wird hierbei gleich dem Ausfallswinkel und der erste Beleuchtungswinkel gleich dem ersten Detektionswinkel gewählt. Zur Ableitung der magnetischen Eigenschaften der Bestandteile des Blattguts emittiert die Beleuchtungseinrichtung bevorzugt polarisiertes Licht und das entlang der Linie spiegelnd reflektierte Licht wird vor der Detektionseinrichtung mittels eines Polarisators analysiert.

Ein Vorteil der erfindungsgemäßen Lösung besteht darin, dass die Vorrichtung einfach aufgebaut ist und die von der Detektionseinrichtung detektierten Intensitäten im Wesentlichen lediglich die Anteile des spiegelnd reflektierten Lichts enthalten, so dass auf ein aufwendiges Auswerteverfahren der detektierten Intensitäten verzichtet werden kann. Durch die Verwendung von polarisiertem Licht bei der Beleuchtung und einer geeigneten Analyse des spiegelnd reflektierten Lichts mittels eines Polarisators können zusätzlich magnetische Eigenschaften der Bestandteile des Blattguts abgeleitet werden.

Zur Detektion von spiegelnd reflektierenden Bestandteilen des Blattguts und deren magnetischen Eigenschaften wird das Blattgut in der Linienebene geführt, so dass das von der Beleuchtungseinrichtung emittierte Licht direkt auf das Blattgut trifft und von den spiegelnd reflektierenden Bestandteilen des Blattguts reflektiert wird.

Zur Detektion von magnetischen Eigenschaften von nicht spiegelnd reflektierenden Bestandteilen wird in der Linienebene ein Reflektor vorgesehen, der bevorzugt einen hohen magnetischen Kerr-Effekt aufweist. Das Blattgut wird zur Detektion an diesem Reflektor vorbeigeführt, so dass die permanent magnetisierten magnetischen Bestandteile des Blattguts durch Magnetisierung des Reflektors dessen Kerr-Effekt beeinflussen, was eine Veränderung der am Reflektor reflektierten Lichtintensität zur Folge hat

Nachfolgend werden verschiedene Ausführungsformen der Erfindung und deren Funktionsprinzipien anhand der Figuren beschrieben. Darin zeigen:
- Fig. 1: Prinzipskizze einer ersten Ausführungsform der Erfindung,
- Fig. 2: Prinzipskizzen für verschiedene Arten der Lichtreflexion,
- Fig. 3: allgemeine Prinzipskizze zur Anordnung der einzelnen Komponenten,
- Fig. 4: Prinzipskizze einer zweiten Ausführungsform der Erfindung,
- Fig. 5: Prinzipskizze einer dritten Ausführungsform der Erfindung,
- Fig. 6: Prinzipskizze einer vierten Ausführungsform der Erfindung,
- Fig. 7: Funktionsprinzip der Erfindung gemäß der ersten, zweiten oder dritten Ausführungsform mit unpolarisiertem Licht,
- Fig. 8: Funktionsprinzip der Erfindung gemäß der vierten Ausführungsform mit unpolarisiertem Licht,
- Fig. 9: erstes Funktionsprinzip der Erfindung mit polarisiertem Licht,
- Fig. 10: zweites Funktionsprinzip der Erfindung mit polarisiertem Licht,
- Fig. 11: drittes Funktionsprinzip der Erfindung mit polarisiertem Licht,
- Fig. 12: Kombination mehrerer Vorrichtungen gemäß der zweiten Ausführungsform mit unterschiedlichen Funktionsprinzipien bei polarisiertem Licht,
- Fig. 13: Tabelle zur Ableitung der magnetischen Eigenschaften der spiegelnd reflektierenden Bestandteile des Blattguts,
- Fig. 14: Prinzipskizze der zweiten Ausführungsform mit einem Reflektor mit bevorzugt hohem Kerr-Effekt.

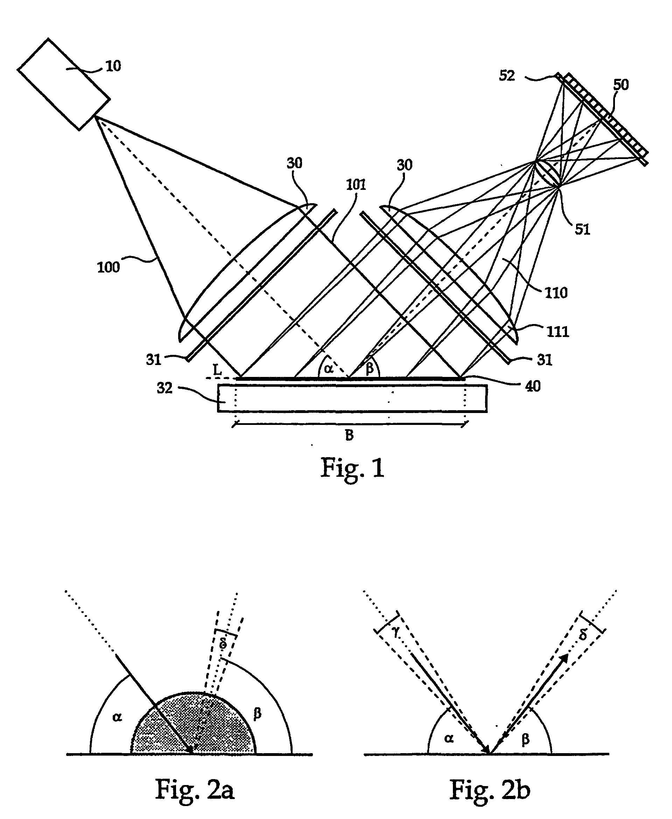

Die Fig. 1 zeigt eine Prinzipskizze einer ersten Ausführungsform der Erfindung. Das von einer Beleuchtungseinrichtung 10 emittierte Licht 100 wird von einer Abbildungseinrichtung 30 in ein im Wesentliches paralleles Lichtbündel 101 umgewandelt, das unter einem Einfallswinkel α auf eine Linie L mit einer Linienebene parallel zum Blattgut 40 fällt und diese beleuchtet Das Blattgut 40 ist hier in der Linienebene angeordnet, so dass das Lichtbündel 101 das Blattgut 40 direkt beleuchtet. Das entlang der Linie L unter einem festen Ausfallswinkel β reflektierte Licht 111 wird mittels der Abbildungseinrichtung 30 und einer Abbildungseinrichtung 51 auf eine Detektionseinrichtung 50 abgebildet Bei dieser Ausführungsform sind die Beleuchtungseinrichtung 10, die Abbildungseinrichtung 30 und die Detektionseinrichtung 50 in einer Ebene angeordnet, die senkrecht auf der Linienebene steht und die Linienebene entlang der Linie L schneidet Zur Detektion von spiegelnd reflektiertem Licht wird der Einfallswinkel α gleich dem Ausfallswinkel β gewählt.

Bevorzugt wird die Länge der Linie L größer oder gleich der Breite B des Blattguts 40 gewählt. Zur Detektion des spiegelnd reflektierten Lichts wird das Blattgut 40 entlang einer Transportrichtung senkrecht zur Ebene, in der die Komponenten angeordnet sind, an der Beleuchtungseinrichtung 10 der Abbildungseinrichtung 30 und der Detektionseinrichtung 50 vorbeitransportiert, so dass beim Vorbeitransport die gesamte Fläche des Blattguts 40 detektiert werden kann.

Bevorzugt weist die Detektionseinrichtung 50 ein CCD-Array auf, das bei Bedarf auch durch ein Fotodioden-Array ersetzt werden kann. Die örtliche Auflösung des reflektierten Lichts entlang der Linie wird hierbei durch die Anzahl der Pixel der Detektionseinrichtung 50 und der Länge der zu detektierenden Linie L bestimmt. Für spezielle Anwendungen ist es auch denkbar, dass das CCD- bzw. Fotodioden-Array lediglich ein einziges Pixel aufweist.

Bevorzugt emittiert die Beleuchtungseinrichtung 10 polarisiertes Licht, das beispielsweise durch eine Laserdiode oder eine Glühlampe mit entsprechendem Polarisator erzeugt werden kann. Zur Bestimmung von magnetischen Materialeigenschaften der spiegelnd reflektierenden Bestandteile des Blattguts 40 können im Strahlengang 100,101,110,111 zwischen der Beleuchtungseinrichtung 10 und der Detektionseinrichtung 50 beispielsweise λ/4-Platten 31 und/oder Polarisatoren 52 vorgesehen werden. Zusätzlich kann auch eine Magnetfelderzeugungseinrichtung 32 vorgesehen werden, die die magnetischen Eigenschaften der spiegelnd reflektierenden Bestandteile des Blattguts 40 in geeigneter Weise beeinflusst. Auf die Funktionsprinzipien der Vorrichtung zur Ableitung der magnetischen Eigenschaften der spiegelnd reflektierenden Bestandteile des Blattguts 40 wird im Folgenden noch näher eingegangen.

Die Fig. 2 zeigt Prinzipskizzen der verschiedenen Arten von Lichtreflexion. In Fig. 2a ist das Prinzip der diffusen Lichtreflexion dargestellt, bei der das unter einem Einfallswinkel α einfallende Licht gleichmäßig in alle Richtungen reflektiert wird. Wird das diffus reflektierte Licht unter einem Ausfallswinkel β detektiert, so hängt die Intensität des detektierten Lichts von dem Ausfallswinkelbereich δ ab, der von der Detektionseinrichtung erfasst wird. Die einfallende Intensität ist im Allgemeinen wesentlich größer als die detektierte Intensität.

Bei der in Fig. 2b dargestellten spiegelnden Reflexion wird das unter einem Einfallswinkel α einfallende Licht vollständig in Richtung eines Ausfallswinkels β reflektiert, wobei der Einfallswinkel α gleich dem Ausfallswinkel β ist. Die von der Detektionseinrichtung in einem Winkelbereich δ detektierte Intensität ist im Wesentlichen gleich der Intensität des einfallenden Lichts. Dies gilt auch, wenn der Einfallswinkel α des einfallenden Lichtes in einem Einfallswinkelbereich γ variiert wird, wobei der Einfallswinkelbereich γ gleich dem Ausfallswinkelbereich δ ist. Aus dieser Tatsache ergibt sich, dass von der Detektionseinrichtung 50 die gesamte Intensität des reflektierten Lichtbündels 111 detektiert wird, selbst wenn es sich bei dem Lichtbündel 101 lediglich um ein im Wesentlichen paralleles Lichtbündel handelt Geringe Toleranzen in der Parallelität werden durch den Ausfallswinkelbereich δ bei der Detektion des reflektierten Lichtbündels 111 ausgeglichen.

Wird der Winkelbereich δ des detektierten Lichtbündels 111 relativ klein gewählt, so wird aufgrund der oben angegebenen Beziehungen die Intensität des diffus reflektierten Lichtes verschwindend gering gegenüber der Intensität des spiegelnd reflektierten Lichts. Von der Detektionseinrichtung 50 werden somit im Wesentlichen lediglich die Anteile des spiegelnd reflektierten Lichts detektiert.

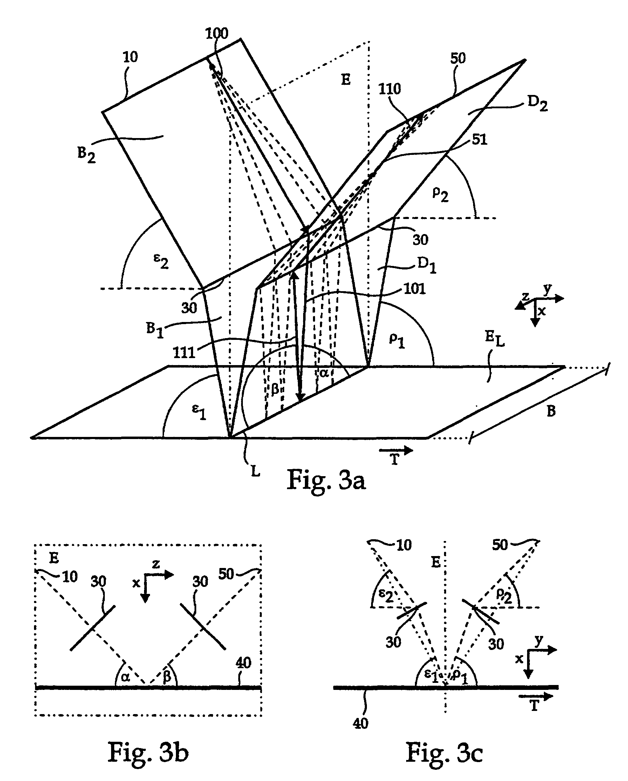

Die Fig. 3 zeigt eine allgemeine Prinzipskizze zur Anordnung der einzelnen Komponenten. In der Fig. 3 sind die Beleuchtungseinrichtung 10, die Abbildungseinrichtung 30, die Detektionseinrichtung 50 und die Abbildungseinrichtung 51 der Übersichtlichkeit halber lediglich als Linien bzw. Punkte dargestellt.

In diesem allgemeinen Fall wird das von der Beleuchtungseinrichtung 10 emittierte Licht 100 in eine zweite Beleuchtungsebene B₂ emittiert, die mit der Linienebene E_{L} einen zweiten Beleuchtungswinkel ε₂ bildet. Das Licht 100 wird von der Abbildungseinrichtung 30 als Licht 101 in die erste Beleuchtungsebene B₁ umgelenkt, die mit der Linienebene E_{L} einen ersten Beleuchtungswinkel ε₁ bildet und die Linienebene E_{L} entlang der Linie L schneidet. In der ersten Beleuchtungsebene B₁ wird die Linie L von dem parallelen Lichtbündel 101 unter einem festen Einfallswinkel α beleuchtet.

Das entlang der Linie L in einer ersten Detektionsebene D₁ unter einem festen Ausfallswinkel β reflektierte Licht 111 wird auf die Detektionseinrichtung 50 abgebildet, wobei die erste Detektionseben D₁ mit der Linienebene E_{L} einen ersten Detektionswinkel ρ₁ bildet und die Linienebene E_{L} entlang der Linie L schneidet. Zur Abbildung des reflektierten Lichts 111 auf die Detektionseinrichtung 50 wird das reflektierte Licht 111 von der Abbildungseinrichtung 30 als Licht 110 in eine zweite Detektionseben D₂ umgeleitet, die mit dem Blattgut 40 einen zweiten Detektionswinkel ρ₂ bildet.

Zur Detektion von spiegelnd reflektiertem Licht wird der Einfallswinkel α gleich dem Ausfallswinkel β und der erste Beleuchtungswinkel ε₁ gleich dem Detektionswinkel ρ₁ gewählt. Der zweite Beleuchtungswinkel ε₂ und der zweite Detektionswinkel ρ₂ können prinzipiell frei gewählt werden.

Bei Bedarf, beispielsweise durch eine vorgegebene räumliche Anordnung der Beleuchtungseinrichtung 10 bzw. der Detektionseinrichtung 50 können im Strahlengang 100,101,111,110 zwischen der Beleuchtungseinrichtung 10 und der Detektionseinrichtung ein oder mehrere hier nicht dargestellte Reflektoren vorgesehen werden, die das Licht geeignet umlenken. Teile der Beleuchtungsebenen B₁, B₂ bzw. der Detektionsebenen D₁, D₂ ändern somit ihre Lage im Raum entsprechend.

Die Fig. 3b und 3c zeigen hierbei die entsprechenden Projektionen der Fig. 3a. Die eingezeichnete Ebene E steht senkrecht auf der Linienebene E_{L} und schneidet die Linienebene E_{L} entlang der Linie L.

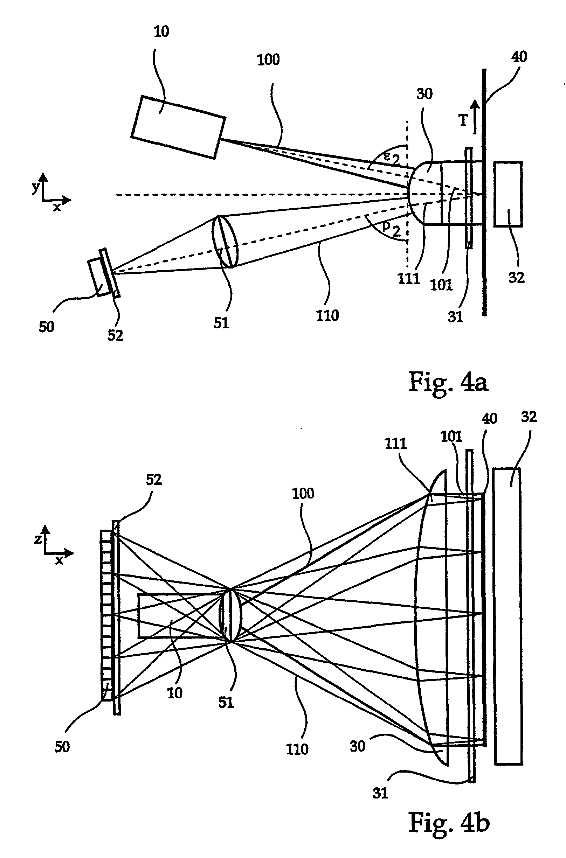

Die Fig. 4 zeigt eine zweite Ausführungsform der Erfindung, bei der der erste Beleuchtungwinkel ε₁ gleich dem ersten Detektionswinkel ρ₁ ist und beide nahezu 90° betragen. Der Einfallswinkel α ist gleich dem Ausfallswinkel β gleich 90° gewählt. Durch diese Anordnung kann die Abbildungseinrichtung 30 durch eine einzige Komponente realisiert werden, so dass die Vorrichtung noch einfacher aufgebaut ist. Die Beleuchtungseinrichtung 10 und die Abbildungsoptik 51 befinden sich jeweils in der Brennebene der Abbildungseinrichtung 30. Das emittierte Licht 100 trifft oberhalb der Mittelebene der Abbildungseinrichtung auf diese. Das reflektierte Licht 111 verläßt die Abbildungseinrichtung 30 unterhalb der Mittelebene als um den zweiten Detektionswinkel p2 umgelenktes Licht 110. Bei dieser Ausführungsform kann entweder der zweite Beleuchtungswinkel ε2 oder der zweite Detektionswinkel ρ₂ frei gewählt werden. Aufgrund der optischen Eigenschaften der Abbildungseinrichtung 30 ist der zweite Beleuchtungswinkel ε₂ in jedem Fall gleich dem zweiten Detektionswinkel ρ₂. Der zweite Beleuchtungswinkel ε₂ und der zweite Detektionswinkel ρ₂ sind in der Fig. 4 aus Gründen der Anschaulichkeit relativ groß dargestellt. In der Praxis werden sie im Allgemeinen jedoch so klein wie möglich gewählt. Die Abweichungen des ersten Beleuchtungswinkels ε₁ und des ersten Detektionswinkels ρ₂ von 90° sind im Allgemeinen so gering, dass sie in der Figur vernachlässigt wurden.

Ein weiterer Vorteil dieser Ausführungsform ist es, dass aufgrund des senkrechten Lichteinfalls Abstandsschwankungen zwischen der Abbildungseinrichtung 30 und dem Blattgut 40 quasi keine Auswirkungen auf die Intensität des detektierten Lichts 110 haben.

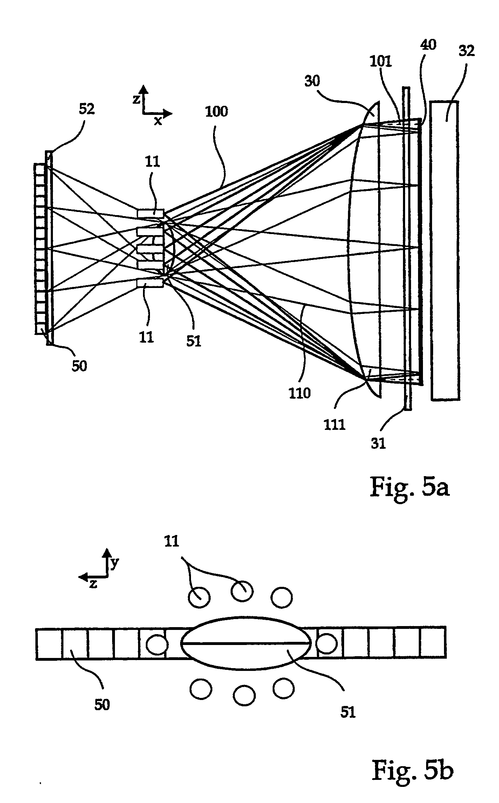

Die Fig. 5 zeigt eine Prinzipskizze einer dritten Ausführungsform der Erfindung, die im Wesentlichen der zweiten Ausführungsform der Erfindung entspricht. Im Unterschied zur zweiten Ausführungsform wird hier auch der zweite Beleuchtungswinkel ε₂ gleich dem zweiten Detektionswinkel ρ₂ gleich 90° gewählt.

Bei dieser Anordnung besteht das Problem, dass die Beleuchtungseinrichtung 10 und die Detektionseinrichtung 50 zumindest scheinbar auf einer Achse senkrecht zum Blattgut 40 liegen. Um die daraus entstehenden Probleme, wie z.B. die Abschattung der Detektionseinrichtung 50 durch die Beleuchtungseinrichtung 10 zu vermeiden, besteht die Beleuchtungseinrichtung 10 hier aus einer Anzahl von Beleuchtungselementen, die im Bereich um die Abbildungseinrichtung 51 herum angeordnet sind. Diese Anordnung der Beleuchtungseinrichtung 10 bedingt, dass das emittierte Licht 100 durch die Abbildungseinrichtung 30 lediglich in ein im Wesentlichen paralleles Lichtbündel umgewandelt wird.

Die entstehenden Abweichungen von der Parallelität des Lichtbündels 101 sind in der Fig. 5a angedeutet Sie können jedoch, wie oben ausgeführt, durch eine entsprechende Wahl des Ausfallswinkelbereichs δ der Detektionseinrichtung 50 kompensiert werden. Das Vorkommen verschiedener Richtungen im beleuchtenden Lichtbündel 101 hat außerdem den Vorteil, dass Variationen der Lage des Objekts, welche durch seine Verkippung gegenüber der Detektionsebene entstehen, ebenfalls kompensiert werden können.

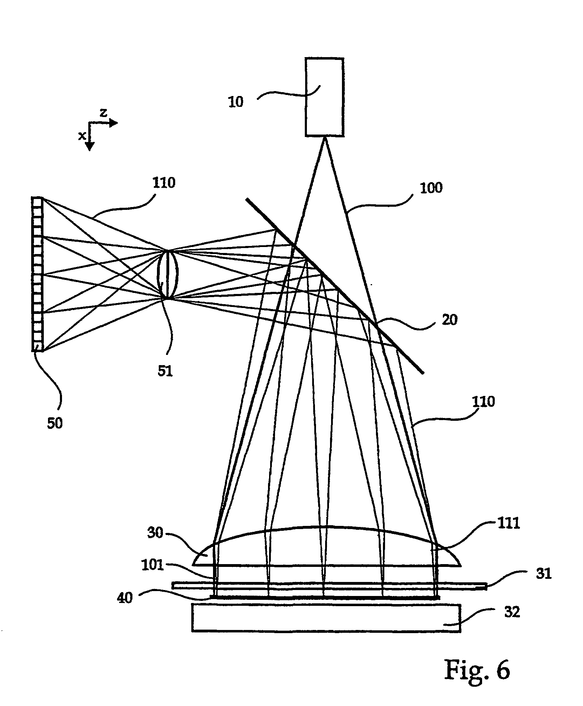

Die Fig. 6 zeigt eine Prinzipskizze einer vierten Ausführungsform der Erfindung, die im Wesentlichen der dritten Ausführungsform entspricht. Zur Vermeidung des oben beschriebenen Problems wird im Strahlengang 100, 110 ein Strahlteiler 20 vorgesehen, der zumindest einen Teil des von der Beleuchtungseinrichtung 10 emittierten Lichts 100 transmittiert und zumindest einen Teil des vom Blattgut 40 reflektierten Lichtes 110 in Richtung der Detektionseinrichtung 50 reflektiert. Somit können auch hier unerwünschte Abschattungen vermieden werden. Bei Bedarf können auch die Positionen von Beleuchtungseinrichtung 10 und Detektionseinrichtung 50 vertauscht werden.

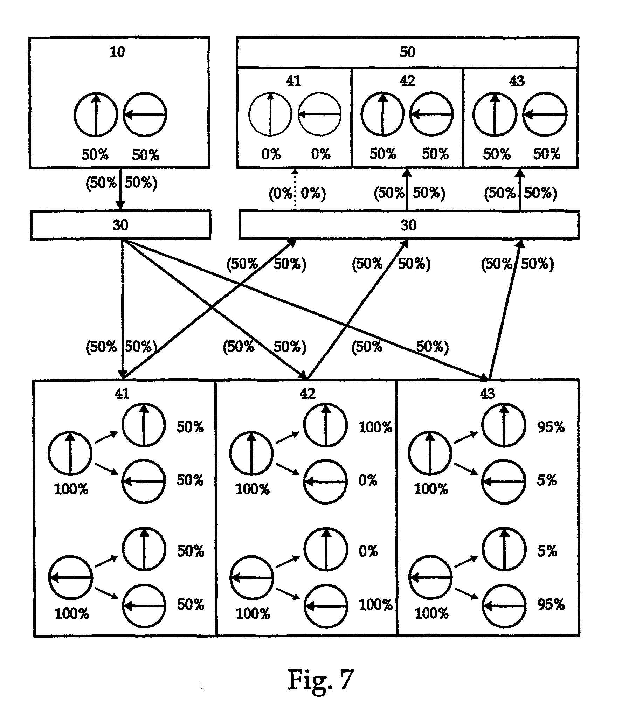

Im Folgenden werden die Funktionsprinzipien der Erfindung anhand der Fig. 7 bis 11 erläutert.

Die Fig. 7 zeigt das Funktionsprinzip der Erfindung gemäß der ersten, zweiten oder dritten Ausführungsform, wobei die Beleuchtungseinrichtung 10 unpolarisiertes Licht emittiert, das jeweils zu 50 % aus einer senkrechten Polarisation und einer waagrechten Polarisation zusammengesetzt ist. Das unpolarisierte Licht wird von der Abbildungseinrichtung 30 auf das Blattgut abgebildet und trifft dort auf unterschiedliche Bereiche. Der Bereich 41 stellt hierbei einen diffus reflektierenden Bereich dar. Der Bereich 42 kennzeichnet einen spiegelnd reflektierenden, metallischen Bereich und der Bereich 43 kennzeichnet einen spiegelnd reflektierenden, magnetischen Bereich, welcher einen magnetooptischen Kerr-Effekt zeigt.

Das auf einen der Bereiche treffende Licht besteht, wie oben ausgeführt, aus 50 % senkrecht und 50 % waagrecht polarisiertem Licht. Beim Auftreffen auf einen diffus reflektierenden Bereich 41 wird der Anteil des senkrecht polarisierten Lichtes in 50 % senkrecht polarisiertes und 50 % waagrecht polarisiertes Licht aufgeteilt Dies gilt auch analog für das auftreffende waagrecht polarisierte Licht. Das von einem solchen Bereich 41 reflektierte Licht besteht somit wieder aus 50 % senkrecht und 50 % waagrecht polarisiertem Licht.

Bei einem spiegelnd metallisch reflektierendem Bereich 42 bleibt die Polarisation sowohl beim senkrecht als auch beim waagrecht polarisiertem Licht erhalten. Das von einem Bereich 42 reflektierte Licht setzt sich somit wiederum aus 50 % senkrecht und 50 % waagrecht polarisiertem Licht zusammen.

Ein spiegelnd magnetisch reflektierender Bereich 43 dreht beispielsweise aufgrund des Kerr-Effektes die Polarisationsrichtung des einfallenden Lichts um einen bestimmten Betrag. Senkrecht polarisiertes Licht wird somit von einem Bereich 43 im Wesentlichen als senkrecht polarisiertes Licht reflektiert, hier 95 %, und zu einem geringen Anteil, hier 5 %, als waagrecht polarisiertes Licht reflektiert. Für auftreffendes waagrecht polarisierten Licht gilt dies in analoger Weise. Durch die entsprechende Summation der Anteile ergibt sich, dass das von einem Bereich 43 reflektierte Licht wiederum 50 % senkrecht und 50 % waagrecht polarisiertes Licht enthält.

Das Verhältnis zwischen senkrecht und waagrecht polarisiertem reflektierten Licht eines Bereichs 43 hängt stark von den magnetischen Eigenschaften der Bestandteile im Blattgut 40 ab. Die angegebenen Anteile von 95 % bzw. 5 % sind hier frei gewählt und sollen lediglich zur Veranschaulichung der auftretenden Effekte dienen.

Das von den Bereichen 41 bis 43 reflektierte Licht wird dann von der Abbildungseinrichtung 30 auf die Detektionseinrichtung 50 abgebildet Durch die erfindungsgemäße Anordnung der Komponenten ist gewährleistet, dass quasi kein vom Bereich 41 diffus reflektiertes Licht von der Detektionseinrichtung 50 detektiert wird. Das vom metallisch spiegelnd reflektierten Bereich 42 und vom magnetisch spiegelnd reflektierten Bereich 43 reflektierte Licht wird quasi vollständig als unpolarisiertes Licht von der Detektionseinrichtung 50 detektiert.

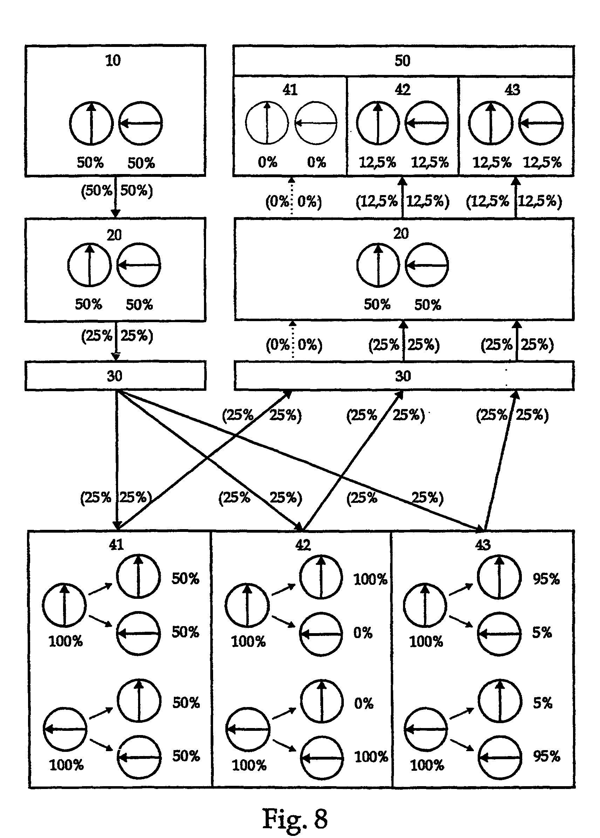

Die Fig. 8 zeigt das Funktionsprinzip der Erfindung gemäß der vierten Ausführungsform. Auch hier wird von der Beleuchtungseinrichtung 10 unpolarisiertes Licht emittiert. Dieses trifft dann zunächst auf den Strahlteiler 20, der jeweils 50 % der senkrecht bzw. waagrecht polarisierten Anteile des Lichts transmittiert Diese werden dann von der Abbildungseinrichtung 30 auf die Bereiche 41 bis 43 des Blattguts 40 abgebildet Die Reflexion erfolgt hier analog dem zu Fig. 7 beschriebenen Funktionsprinzip. Das von den Bereichen 41 bis 43 reflektierte Licht gelangt wiederum zur Abbildungseinrichtung 30, die auch hier lediglich das aus den Bereichen 42 und 43 spiegelnd reflektierte Licht über den Strahlteiler 20 auf die Detektionseinrichtung 50 abbildet. Der Strahlteiler 20 reflektiert hierbei lediglich 50 % der senkrecht bzw. waagrecht polarisierten Anteile des reflektierten Lichts auf die Detektionseinrichtung 50.

Analog zum Funktionsprinzip gemäß Fig. 7 wird von der Detektionseinrichtung 50 auch hier lediglich aus den Bereichen 42 bzw. 43 spiegelnd reflektiertes Licht detektiert. Im Gegensatz zum Funktionsprinzip gemäß Fig. 7 erreicht jedoch nur ein Viertel der Lichtintensität die Detektionseinrichtung 50.

Zusammenfassend lassen sich durch die erste bis vierte Ausführungsform der Erfindung mit einer Beleuchtungseinrichtung 10 mit unpolarisiertem Licht spiegelnd reflektierende Bestandteile des Blattguts 40 detektieren. Die magnetischen Eigenschaften dieser Bestandteile lassen sich jedoch hier nicht ableiten. Der Einfachheit halber werden eventuelle Verluste, beispielsweise durch Absorption und Streuung an den verschiedenen Komponenten der Vorrichtung generell nicht berücksichtigt.

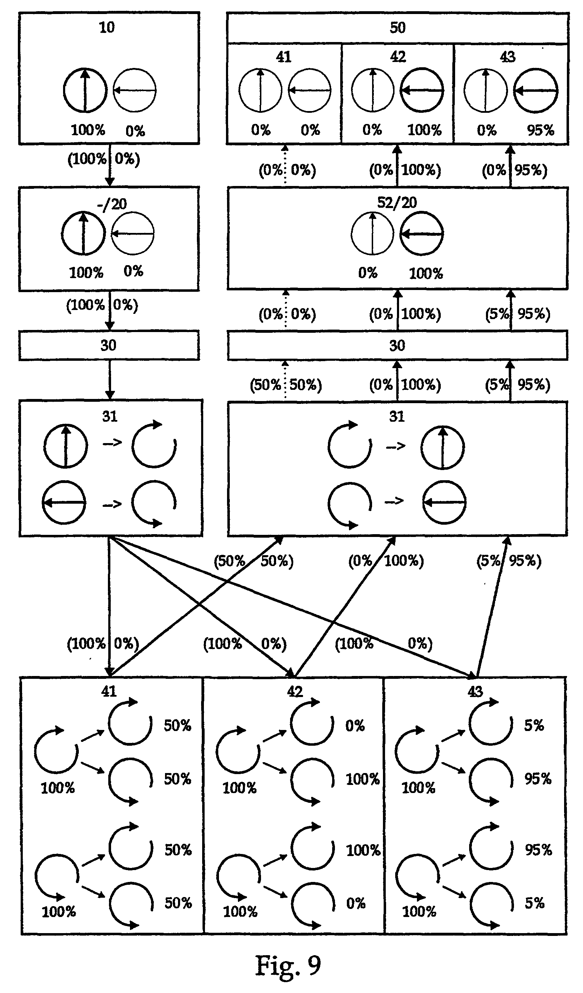

Im Folgenden werden anhand der Fig. 9 bis 11 drei Funktionsprinzipien der Erfindung mit polarisiertem Licht erläutert, die zusätzlich eine Ableitung der magnetischen Eigenschaften der spiegelnd reflektierenden Bestandteile des Blattguts 40 ermöglichen. Bei allen diesen Funktionsprinzipien emittiert die Beleuchtungseinrichtung polarisiertes Licht, das hier zur Darstellung der Effekte beispielsweise zu 100 % senkrecht polarisiert sein soll.

Bei der ersten bis dritten Ausführungsform trifft das von der Beleuchtungseinrichtung 10 emittierte polarisierte Licht direkt auf die Abbildungseinrichtung 30. Bei der vierten Ausführungsform ist ein polarisierender Strahlteiler 20 vorgesehen, der senkrecht polarisiertes Licht transmittiert und waagrecht polarisiertes Licht reflektiert, so dass das von der Beleuchtungseinrichtung 10 emittierte senkrecht polarisierte Licht vollständig vom Strahlteiler 20 transmittiert wird und auf die Abbildungseinrichtung 30 gelangt

Im Strahlengang des vom Blattgut 40 reflektierten Lichts wird bei der ersten bis dritten Ausführungsform zwischen der Abbildungseinrichtung 30 und der Detektionseinrichtung 50 ein Polarisator 52 vorgesehen, der lediglich waagrecht polarisiertes Licht transmittiert. In der vierten Ausführungsform wird aufgrund des polarisierenden Strahlteilers 20 lediglich der waagrecht polarisierte Anteil des vom Blattgut 40 reflektierten Lichts auf die Detektionseinrichtung 50 reflektiert.

Beim ersten Funktionsprinzip gemäß Fig. 9 ist sowohl im Strahlengang zwischen der Abbildungseinrichtung 30 und dem Blattgut 40 als auch im Strahlengang zwischen dem Blattgut 40 und der Abbildungseinrichtung 30 eine λ/4-Platte vorgesehen, die z.B. senkrecht polarisiertes Licht in rechtszirkular polarisiertes Licht und waagrecht polarisiertes Licht in linkszirkular polarisiertes Licht bzw. rechtszirkular polarisiertes Licht in senkrecht polarisiertes und linkspolarisiertes Licht in waagrecht polarisiertes Licht umwandelt

Bei der Reflexion am diffus reflektierenden Bereich 41 wird das auftreffende rechtszirkular polarisierte Licht zu 50 % in rechtszirkular polarisiertes Licht und zu 50 % in linkszirkular polarisiertes Licht umgewandelt Bei der Reflexion des rechtszirkular polarisierten Lichts am spiegelnd metallischen Bereich 42 wird das rechtszirkular polarisierte Licht vollständig in linkszirkular polarisiertes Licht umgewandelt Bei der Reflexion des rechtszirkular polarisierten Lichts an dem spiegelnd magnetisch reflektierenden Bereich 43 wird das rechtszirkular polarisierte Licht im Wesentlichen, hier 95 %, in linkszirkular polarisiertes Licht umgewandelt und eine geringer Anteil, hier 5 %, bleibt als rechtszirkular polarisiertes Licht erhalten. Beim Durchtritt des reflektierten Lichts durch die λ/4-Platte 31 werden die zirkular polarisierten Anteile wieder in linear polarisierte Anteile umgewandelt, die dann, wie oben beschrieben, durch den Polarisator 32 bzw. den polarisierenden Strahlteiler 20 analysiert werden.

Beim ersten Funktionsprinzip der Erfindung mit polarisiertem Licht ergibt sich somit, dass von dem am diffus reflektierenden Bereich 41 keine Intensität an der Detektoreinrichtung 50 detektiert wird. Die Intensität am metallisch reflektierenden Bereich 42 reflektierten Lichts wird von der Detektionseinrichtung 50 vollständig detektiert, während die Intensität des am magnetisch spiegelnd reflektierenden Bereich 43 reflektierten Lichts um einen gewissen Anteil, hier 5 %, geringer ist. Somit kann der metallisch reflektierende Bereich 42 und der magnetisch reflektierende Bereich 43 voneinander unterschieden werden.

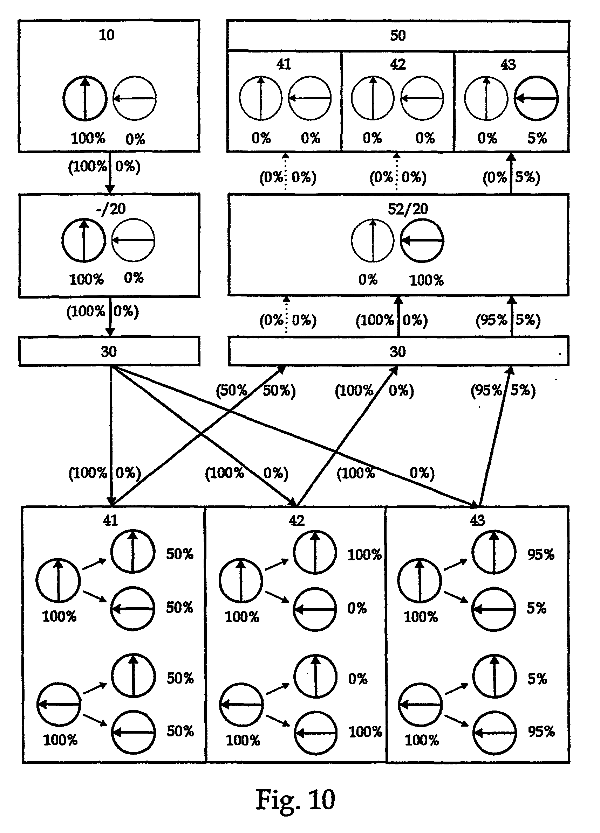

Die Fig. 10 zeigt ein zweites Funktionsprinzip der Erfindung mit polarisiertem Licht, bei der die λ/4-Platte 31 gemäß dem ersten Funktionsprinzip der Erfindung weggelassen wurde, so dass das Blattgut 40 direkt mit senkrecht polarisiertem Licht beleuchtet wird. Die Reflexion an den Bereichen 41 bis 43 findet, wie schon im Funktionsprinzip gemäß Fig. 7 ausgeführt, in analoger Weise statt. Durch die zusätzliche Analyse des reflektierten Lichts mittels dem Polarisator 52 bzw. dem polarisierendem Strahlteiler 20 gelangt kein von den Bereichen 41 und 42 reflektiertes Licht zum Detektor 50. Lediglich ein Anteil, hier 5 %, des vom magnetisch reflektierenden Bereich 43 reflektierten Lichts wird von der Detektionseinrichtung 50 detektiert. Durch das zweite Funktionsprinzip der Erfindung mit polarisiertem Licht lassen sich somit lediglich magnetisch spiegelnde Bereiche 43 des Blattguts 40 detektieren.

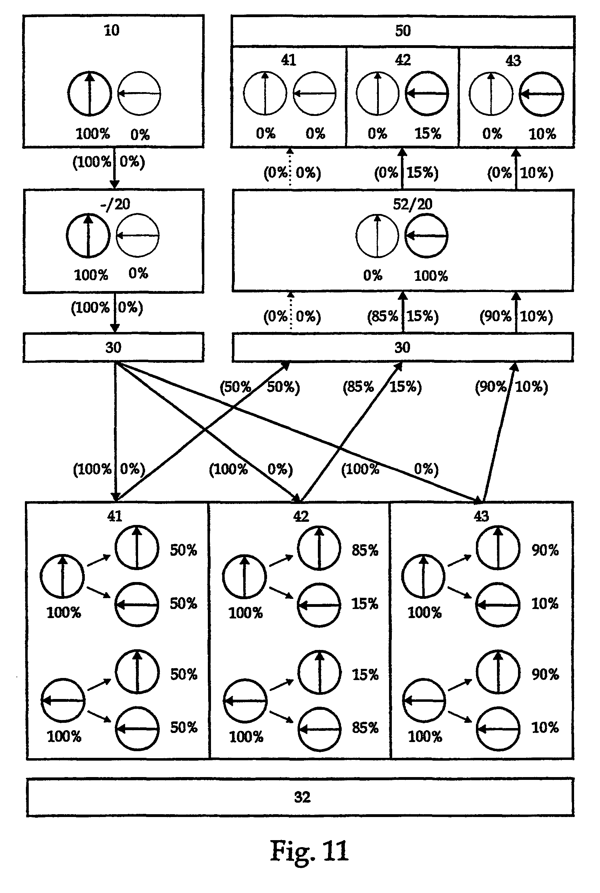

Das dritte Funktionsprinzip der Erfindung mit polarisiertem Licht ist in Fig. 11 dargestellt und entspricht im Wesentlichen dem zweiten Funktionsprinzip der Erfindung mit polarisiertem Licht, wobei im Bereich des Blattguts 40 zusätzlich eine Magnetfelderzeugungseinrichtung 32 vorgesehen ist Das von der Magnetfelderzeugungseinrichtung 32 erzeugte Magnetfeld wird in diesem Beispiel so groß gewählt, dass die Polarisation des vom metallisch reflektierenden Bereichs 42 reflektierten Lichts im Wesentlichen, hier 85 %, erhalten bleibt und zu einem geringen Anteil, hier 15 %, in die andere Polarisationsrichtung umgewandelt wird.

Werden die magnetischen Bestandteile des Bereichs 43 von dem Magnetfeld der Magnetfelderzeugungseinrichtung 32 ausgerichtet, so richten sich diese entgegengesetzt zum Magnetfeld der Magnetfelderzeugungseinrichtung 32 aus, so dass dieses Magnetfeld und somit die Drehung der Polarisationsebene entsprechend vermindert werden. In diesem Beispiel findet durch die magnetischen Bestandteile des Bereichs 43 eine Verminderung des Magnetfelds der Magnetfelderzeugungseinrichtung 32 statt, so dass die Polarisation der Anteile im Wesentlichen, hier 90 %, erhalten bleibt. Bei einem geringeren Anteil, hier 10 %, wird die Polarisation des Lichts geändert.

Auch hier wird wie bei allen Funktionsprinzipien der Erfindung kein Licht detektiert, das vom diffus reflektierenden Bereich 41 reflektiert wurde. Da das Magnetfeld der Magnetfelderzeugungseinrichtung 32 durch die magnetischen Bestandteile des Blattguts 40 im magnetisch reflektierenden Bereich 43 des Blattguts 40 vermindert wurde, ist auch die Intensität des von der Detektionseinrichtung 50 detektierten Lichts des Bereichs 43, hier 10 %, geringer als die Intensität des vom metallisch reflektierenden Bereichs 42, hier 15 %, so dass auch hier eine Unterscheidung zwischen metallisch reflektiertem und magnetisch reflektiertem Licht abgeleitet werden kann.

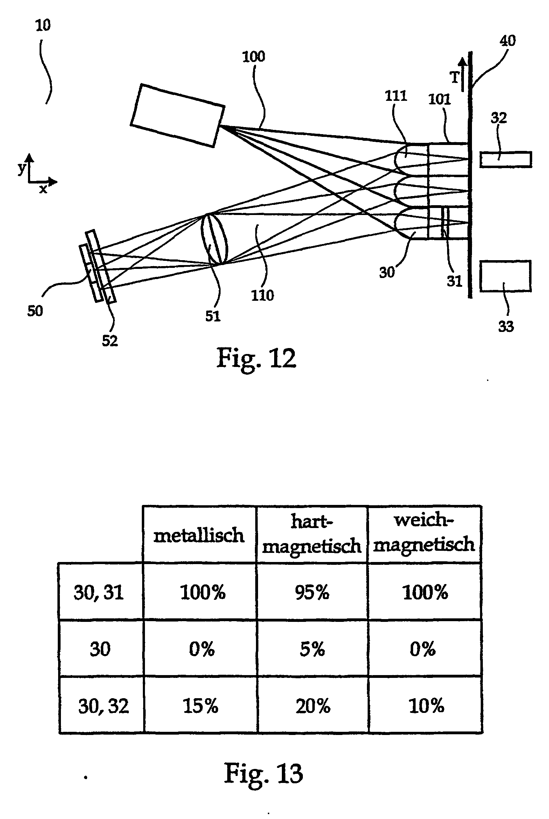

Die Fig. 12 zeigte eine Kombination mehrerer Vorrichtungen gemäß der zweiten Ausführungsform mit unterschiedlichen Funktionsprinzipien bei polarisiertem Licht. Das von der Beleuchtungseinrichtung 10 emittierte Licht 100 wird von den Abbildungseinrichtungen 30 senkrecht auf das Blattgut 40 abgebildet und das vom Blattgut 40 reflektierte Licht 111 von der Abbildungseinrichtung 30 als Licht 110 über die Abbildungseinrichtung 51 auf den Detektor 50 abgebildet. Vor dem Auftreffen des Lichts 110 auf den Detektor 50 ist ein Polarisator 52 vorgesehen, der analog zum ersten bis dritten Funktionsprinzip der Erfindung mit polarisiertem Licht lediglich die Polarisationskomponenten transmittiert, die senkrecht auf der Polarisation des Lichts 100 stehen.

Um eine zusätzliche Unterscheidung zwischen hartmagnetischen und weichmagnetischen Bestandteilen des Blattguts 40 treffen zu können, wird zusätzlich eine weitere Magnetfelderzeugungseinrichtung 33 vorgesehen, mittels der die hartmagnetischen Bestandteile des Blattguts so vormagnetisiert werden, dass sie das Magnetfeld der Magnetfelderzeugungseinrichtung 32 verstärken. Als Magnetfelderzeugungseinrichtungen 32 bzw. 33 können beispielsweise Permanentmagneten oder stromdurchflossene Spulen verwendet werden.

Die Fig. 13 zeigt eine Tabelle zur Ableitung der magnetischen Eigenschaften der spiegelnd reflektierenden Bestandteile des Blattguts 40, bei der die von der Detektionseinrichtung 50 detektierten Intensitäten der einzelnen Vorrichtungen aufgelistet sind.

Die erste Vorrichtung mit einer Abbildungseinrichtung 30 und einer λ/4-Platte 31 detektiert für metallische Bestandteile 100 % der Lichtintensität und für hartmagnetische Bestandteile 95 % der Lichtintensität, wie zu Fig. 9 beschrieben. Da kein äußeres Magnetfeld vorhanden ist, verhalten sich die weichmagnetischen Bestandteile hier wie metallische Bestandteile und es lässt sich somit von der Detektionseinrichtung 50 eine Lichtintensität von 100 % detektieren.

Die zweite Vorrichtung weist lediglich eine Abbildungseinrichtung 30 auf, so dass, wie zu Fig. 10 beschrieben, lediglich von den hartmagnetischen Bestandteilen eine Lichtintensität von 5 % detektiert werden kann. Von den metallisch bzw. weichmagnetisch reflektierenden Bestandteilen des Blattguts 40 wird keine Intensität detektiert.

Die dritte Vorrichtung weist eine Abbildungseinrichtung 30 und eine Magnetfelderzeugungseinrichtung 32 auf, deren Magnetfeld so gewählt ist, dass es nicht in der Lage ist, die hartmagnetischen Bestandteile des Blattguts auszurichten. Wie zu Fig. 11 beschrieben, ergibt sich für die metallischen Bestandteile des Blattguts 40 aufgrund des Magnetfelds der Magnetfelderzeugungseinrichtung 32 eine Lichtintensität von 15 %. Die hartmagnetischen Bestandteile des Blattguts wurden, wie oben ausgeführt, durch die Magnetfelderzeugungseinrichtung 33 so vormagnetisiert, dass sie das Magnetfeld der Magnetfelderzeugungseinrichtung 32 verstärken und somit die von der Detektionseinrichtung 50 detektierte Lichtintensität auf hier 20 % erhöhen. Die weichmagnetischen Bestandteile des Blattguts 40 werden im Magnetfeld der Magnetfelderzeugungseinrichtung 32 entgegengesetzt ausgerichtet, so dass sie das Magnetfeld der Magnetfelderzeugungseinrichtung 32 abschwächen und hier lediglich eine Lichtintensität von 10 % detektiert wird.

Aus den detektierten Lichtintensitäten lassen sich die magnetischen Eigenschaften der spiegelnd reflektierenden Bestandteile des Blattguts 40 ableiten.

Aus der Messung der zweiten Vorrichtung können die hartmagnetischen Bestandteile des Blattguts 40 abgeleitet werden. Für die metallischen bzw. weichmagnetisch reflektierenden Bestandteile des Blattguts 40 können beispielsweise die Verhältnisse der Lichtintensität der dritten Vorrichtung zu den entsprechenden Lichtintensitäten der ersten Vorrichtung gebildet werden. Aufgrund der obigen Ausführungen gilt nun, dass das Lichtintensitätsverhältnis der metallischen Bestandteile, hier 0.15, immer größer ist als das Lichtintensitätsverhältnis der weichmagnetischen Bestandteile des Blattguts 40, hier 0.1.

Durch eine geeignete Kombination mehrerer erfindungsgemäßer Vorrichtungen können die magnetischen Eigenschaften der spiegelnd reflektierenden Bestandteile des Blattguts 40 somit zusätzlich in metallisch, hartmagnetisch oder weichmagnetisch aufgeteilt werden.

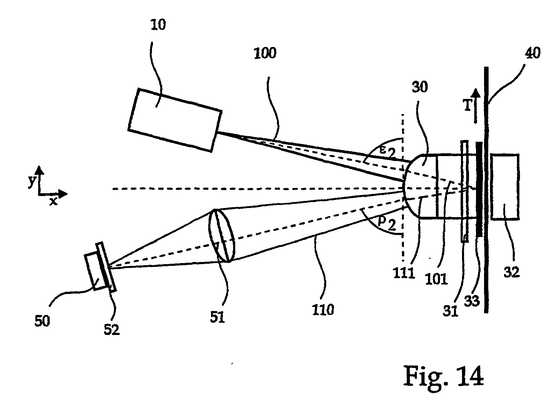

Bei den oben beschriebenen Ausführungsformen wurde das Blattgut 40 in der Linienebene E_{L} angeordnet. Die Fig. 14 zeigt eine Prinzipskizze der zweiten Ausführungsform, bei der in der Linienebene E_{L} ein Reflektor 33 vorgesehen ist. Dieser weist entlang der Linie L einen spiegelnd magnetisch reflektierenden Bereich, analog zum Bereich 43 des Blattguts 40 auf, mit einem bevorzugt hohen Kerr-Effekt.

Das Lichtbündel 101 wird vom Reflektor 33 als reflektiertes Lichtbündel 111 reflektiert Wird von der Beleuchtungseinrichtung 10 polarisiertes Licht 100 emittiert, so verhält sich dieses bei der Reflexion, wie schon oben zu den Funktionsprinzipien gemäß Fig. 9,10 und 11 für den Bereich 43 des Blattguts 40 beschrieben.

Wird nun das Blattgut 40 zur Detektion an dem Reflektor 33 vorbeigeführt, so beeinflussen die magnetischen Bestandteile des Blattguts 40 den Kerr-Effekt des Reflektors 33, was gemäß den oben beschriebenen Funktionsprinzipien zu einer Veränderung der detektierten Lichtintensität führt.

Selbstverständlich kann bei Bedarf auch die erste, dritte und vierte Ausführungsform durch Einfügen eines Reflektors 33 an der entsprechenden Stelle in der beschriebenen Art und Weise abgewandelt werden.

Vorteil dieser Ausführungsformen ist es, dass hier auch die magnetischen Eigenschaften von Bestandteilen des Blattguts 40 detektiert werden können, die nicht spiegelnd reflektieren.

Durch geeignete Kombinationen der oben beschriebenen Ausführungsformen lassen sich somit spiegelnd reflektierende Bestandteile detektieren. Bei Bedarf können die magnetischen Eigenschaften dieser spiegelnd reflektierenden Bestandteile abgeleitet werden. Weiterhin ist es möglich, die magnetischen Eigenschaften nicht spiegelnd reflektierender magnetischer Bestandteile des Blattguts 40 abzuleiten.

Mit einer erfindungsgemäßen Vorrichtung lassen sich beispielsweise Sicherheitsdokumente detektieren, die spiegelnd reflektierende Bestandteile mit Kerr-Effekt aufweisen. Zur Erhöhung der Sicherheit des Sicherheitsdokuments kann das Dokument spiegelnd reflektierende Bestandteile mit unterschiedlichen Kerr-Effekten aufweisen, die beispielsweise mit einer erfindungsgemäßen Vorrichtung unterschieden werden können. Bevorzugt sollte der Kerr-Effekt der spiegelnd reflektierenden Bestandteile relativ hoch sein, um eine hohe Nachweissicherheit gewährleisten zu können.

Die Bestandteile können als Figuren und/oder Codes angeordnet werden.
Diese können beispielsweise mit einer Druckfarbe auf das Dokument aufgebracht oder als Partikel oder Sicherheitsfaden in das Dokument eingebracht werden.

## Patentansprüche

1. Vorrichtung zur Detektion von Eigenschaften eines Blattguts, wie z.B. Banknoten oder Wertpapieren, durch reflektiertes Licht mit
- einer Beleuchtungseinrichtung (10), die in einem zweiten Beleuchtungswinkel (∈₂) zum Blattgut (40) ausgerichtet ist und Licht (100) emittiert, und
- einer Detektionseinrichtung (50), die in einem zweiten Detektionswinkel (ρ₂) zum Blattgut (40) ausgerichtet ist und das vom Blattgut (40) direkt reflektierte Licht (110) detektiert
dadurch **gekennzeichnet,** daß eine Abbildungseinrichtung (30) vorgesehen ist,
- die in unmittelbarer Nähe einer Linie (L) liegt, die in einer zum Blattgut (40) parallelen Linienebene (E_{L}) angeordnet ist,
- deren Brennweite derart vorgesehen ist, daß sich die Beleuchtungseinrichtung (10) und eine weitere Abbildungseinrichtung (51) zumindest annähernd in ihrer Brennebene befinden,
- die das von der Beleuchtungseinrichtung (10) divergent emittierte Licht (100) in ein im wesentlichen paralleles Lichtbündel (101) umwandelt, das die Linie (L) in einer ersten Beleuchtungsebene (B,) unter einem festen Einfallswinkel (α) beleuchtet, wobei die erste Beleuchtungsebene (B₁) mit der Linienebene (E₁) einen ersten Beleuchtungswinkel (E₁) bildet und die Linienebene (E₁) entlang der Linie (L) schneider und
- die das entlang der Linie (L) in einer ersten Detektionsebene (D₁) unter einem festen Ausfallswinkel (β) reflektierte Licht (111) so auf die weitere der Detektionseinrichtung (50) vorgeschalteten Abbildungseinrichtung (51) abbildet, daß diese mit ihrer Apertur im wesentlichen diejenigen Lichtbündel umfaßt, die von entlang der Linie (L) so reflektiert werden, daß ihre Achsen den Ausfallwinkel (β) zur Linie (L) aufweisen, wobei die erste Detektionsebene (D₁) mit der Linienebene (E₁) einen ersten Detektionswinkel (ρ₁) bildet und die Linienebene (E_{L}) entlang der Linie (L) schneidet und
- der Einfallswinkel (α) gleich dem Ausfallwinkel (β) und der erste Beleuchtungswinkel (∈₁) gleich dem ersten Detektionswinkel (ρ₁) ist.

2. Vorrichtung nach Anspruch 1, dadurch **gekennzeichnet,** dass die Beleuchtungseinrichtung das Licht (100) in eine zweite Beleuchtungsebene (B₂) emittiert, die mit der Linienebene (E_{L}) einen zweiten Beleuchtungswinkel (ε₂) bildet und die Abbildungseinrichtung (30) das emittierte Licht (100) in die erste Beleuchtungsebene (B₁) umlenkt.

3. Vorrichtung nach Anspruch 1, dadurch **gekennzeichnet,** dass das entlang der Linie (L) in der ersten Detektionsebene (D₁) reflektierte Licht (111) von der Abbildungseinrichtung (30) in eine zweite Detektionsebene (D₂) umgelenkt wird, die mit der Linienebene (E_{L}) einen zweiten Detektionswinkelswinkel (ρ₂) bildet.

4. Vorrichtung nach Anspruch 1, dadurch **gekennzeichnet,** dass der erste Beleuchtungswinkel (ε₁) gleich dem ersten Detektionswinkel (ρ₁) ist und beide nahezu 90° betragen.

5. Vorrichtung nach Anspruch 4, dadurch **gekennzeichnet,** dass der Einfallswinkel (α) gleich dem Ausfallswinkel (β) gleich 90° ist und die Beleuchtungseinrichtung (10) in einem Bereich um die Detektionseinrichtung (50) angeordnet ist.

6. Vorrichtung nach Anspruch 1, dadurch **gekennzeichnet,** dass im Strahlengang (100,101,111,110) zwischen der Beleuchtungseinrichtung (10) und der Detektionseinrichtung (50) ein Strahlteiler (20) vorgesehen ist.

7. Vorrichtung nach Anspruch 6, dadurch **gekennzeichnet,** dass der Strahlteiler (20) als polarisierender Strahlteiler ausgeführt ist

8. Vorrichtung nach einem der Ansprüche 1 oder 6, dadurch **gekennzeichnet,** dass im Strahlengang (100,101,111,110) zwischen der Beleuchtungseinrichtung (10) und der Detektionseinrichtung (50) mindestens ein Polarisator (52) vorgesehen ist.

9. Vorrichtung nach einem der Ansprüche 1 bis 8 dadurch **gekennzeichnet,** dass im Strahlengang (100,101,111,110) zwischen der Beleuchtungseinrichtung (10) und der Detektionseinrichtung (50) mindestens eine λ/4-Platte (31) vorgesehen ist.

10. Vorrichtung nach einem der Ansprüche 1 bis 9 dadurch **gekennzeichnet,** dass im Strahlengang (100,101,111,110) zwischen der Beleuchtungseinrichtung (10) und der Detektionseinrichtung (50) mindestens ein Reflektor vorgesehen ist.

11. Vorrichtung nach Anspruch 1, dadurch **gekennzeichnet,** dass die Beleuchtungseinrichtung (10) polarisiertes Licht emittiert.

12. Vorrichtung nach Anspruch 11, dadurch **gekennzeichnet,** dass die Beleuchtungseinrichtung (10) mindestens eine Laserdiode aufweist.

13. Vorrichtung nach Anspruch 1, dadurch **gekennzeichnet,** dass die Detektionseinrichtung (50) ein CCD-Array aufweist.

14. Vorrichtung nach Anspruch 1, dadurch **gekennzeichnet,** dass die Detektionseinrichtung (50) ein Fotodioden-Array aufweist

15. Vorrichtung nach Anspruch 1, dadurch **gekennzeichnet**, dass die Linie (L) länger ist als die Breite (B) des Blattguts(40).

16. Vorrichtung nach einem der Ansprüche 1 bis 15, dadurch **gekennzeichnet,** dass das Blattgut (40) in der Linienebene (E_{L}) angeordnet ist.

17. Vorrichtung nach einem der Ansprüche 1 bis 15, dadurch **gekennzeichnet,** dass in der Linienebene (E_{L}) ein Reflektor (33) vorgesehen ist.

18. Vorrichtung nach Anspruch 17, dadurch **gekennzeichnet,** dass der Reflektor (33) einen hohen Kerr-Effekt aufweist.

19. Sicherheitsdokument mit spiegelnd reflektierenden Bestandteilen, die unterschiedliche Kerr-Effekte aufweisen, dadurch **gekennzeichnet,** daß die Bestandteile mit einer Druckfarbe auf das Dokument aufgebracht und/oder als Sicherheitsfaden in das Dokument eingebracht sind.

20. Sicherheitsdokument nach Anspruch 19, dadurch **gekennzeichnet,** daß mit den Bestandteilen Figuren und/oder Codes in und/oder auf dem Dokument angeordnet werden.

## Claims

1. An apparatus for detecting properties of sheet material, such as bank notes or papers of value, by reflected light having
- an illuminating device (10) which is aligned in a second illumination angle (ε₂) to the sheet material (40) and emits light (100), and
- a detecting device (50) which is aligned in a second detection angle (ρ₂) to the sheet material (40) and detects light (110) reflected directly by the sheet material (40),
characterized in that an imaging device (30) is provided
- which is disposed in the immediate vicinity of a line (L) disposed in a line plane (*E*_{*L*}) parallel to the sheet material (40),
- whose focal length is provided such that the illuminating device (10) and a further imaging device (51) are located at least approximately in the focal plane thereof,
- which converts light (100) emitted divergently by the illuminating device (10) into a substantially parallel light pencil (101) which illuminates the line (*L*) in a first illumination plane (*B*₁) at a fixed angle of incidence (α), the first illumination plane (*B*₁) forming with the line plane (*E*_{*L*}) a first illumination angle (ε₁) and intersecting the line plane (*E*_{*L*}) along the line (*L*), and
- which images light (111) reflected along the line (*L*) in a first detection plane (*D*₁) at a fixed angle of reflection (*β*) onto the further imaging device (51) preceding the detecting device (50) such that said further imaging device (51) spans with its aperture substantially those light pencils reflected along the line (*L*) such that their axes have the angle of reflection (β) to the line (*L*)*,* the first detection plane (*D*₁) forming with the line plane (*E*_{*L*}) a first detection angle (ρ₁) and intersecting the line plane (*E*_{*L*}) along the line (*L*), and
- the angle of incidence (α) is equal to the angle of reflection (β), and the first illumination angle (ε₁) is equal to the first detection angle (ρ₁).

2. An apparatus according to claim 1, characterized in that the illuminating device emits light (100) into a second illumination plane (*B*₂) forming with the line plane (*E*_{*L*}) a second illumination angle (ε₂), and the imaging device (30) deflects emitted light (100) into the first illumination plane (*B*₁).

3. An apparatus according to claim 1, characterized in that light (111) reflected along the line (L) in the first detection plane (*D*₁) is deflected by the imaging device (30) into a second detection plane (*D*₂) forming with the line plane (*E*_{*L*}) a second detection angle (ρ₂).

4. An apparatus according to claim 1, characterized in that the first illumination angle (ε₁) is equal to the first detection angle (ρ₁) and both are almost 90°.

5. An apparatus according to claim 4, characterized in that the angle of incidence (α) is equal to the angle of reflection (β) equaling 90°, and the illuminating device (10) is disposed in an area around the detecting device (50).

6. An apparatus according to claim 1, characterized in that a beam splitter (20) is provided in the beam path (100, 101, 111, 110) between the illuminating device (10) and the detecting device (50).

7. An apparatus according to claim 6, characterized in that the beam splitter (20) is executed as a polarizing beam splitter.

8. An apparatus according to either of claims 1 or 6, characterized in that at least one polarizer (52) is provided in the beam path (100, 101, 111, 110) between the illuminating device (10) and the detecting device (50).

9. An apparatus according to any of claims 1 to 8, characterized in that at least one quarter-wave plate (31) is provided in the beam path (100, 101, 111, 110) between the illuminating device (10) and the detecting device (50).

10. An apparatus according to any of claims 1 to 9, characterized in that at least one reflector is provided in the beam path (100, 101, 111, 110) between the illuminating device (10) and the detecting device (50).

11. An apparatus according to claim 1, characterized in that the illuminating device (10) emits polarized light.

12. An apparatus according to claim 11, characterized in that the illuminating device (10) has at least one laser diode.

13. An apparatus according to claim 1, characterized in that the detecting device (50) has a CCD array.

14. An apparatus according to claim 1, characterized in that the detecting device (50) has a photodiode array.

15. An apparatus according to claim 1, characterized in that the line (*L*) is longer than the width (*B*) of the sheet material (40).

16. An apparatus according to any of claims 1 to 15, characterized in that the sheet material (40) is disposed in the line plane (*E*_{*L*}).

17. An apparatus according to any of claims 1 to 15, characterized in that a reflector (33) is provided *in* the line plane (*E*_{*L*}).

18. An apparatus according to claim 17, characterized in that the reflector (33) has a high Kerr effect.

19. A security document having specularly reflecting components with different Kerr effects, characterized in that the components are applied to the document with a printing ink and/or incorporated in the document as a security thread.

20. A security document according to claim 19, characterized in that figures and/or codes are disposed with the components in and/or on the document.

## Revendications

1. Dispositif pour la détection des propriétés d'un élément en forme de feuille, comme par exemple des billets de banque ou du papier ayant une valeur, par réflexion de la lumière avec :
- un dispositif d'éclairage (10), qui est dirigé vers l'élément en forme de feuille (40) avec un deuxième angle d'éclairage (ε₂) et qui émet de la lumière (100), et
- un dispositif de détection (50), qui est dirigé vers l'élément en forme de feuille (40) avec un deuxième angle de détection (ρ₂) et qui détecte la lumière réfléchie (110) directement par l'élément en forme de feuille (40),
caractérisé en ce qu'un dispositif d'image (30) est prévu ;
- qui repose dans un voisinage immédiat d'une ligne (L), celle-ci étant disposée dans un plan de ligne (E_{L}) parallèle à l'élément en forme de feuille (40),
- dont la distance focale est prévue de telle manière que le dispositif d'éclairage (10) et un autre dispositif d'image (51) se trouvent au moins à proximité de son plan focal,
- qui change la lumière émise de manière divergente par le dispositif d'éclairage (10) en un faisceau de lumière (101) essentiellement parallèle, faisceau qui éclaire la ligne (L) dans un premier plan d'éclairage (B₁) sous un angle solide d'incidence (α), le premier plan d'éclairage (B₁) formant avec le plan de ligne (E_{L}) un premier angle d'éclairage (ε₁) et coupant le plan de ligne (EL) le long de la ligne (L), et
- qui forme la lumière réfléchie (111) le long de la ligne (L) dans un premier plan de détection (D₁) sous un angle solide émergeant (β) sur l'autre dispositif d'image (51) placé en amont du dispositif de détection (50) de telle manière que le dispositif d'image (51) entoure avec son ouverture ces faisceaux de lumière d'une manière substantielle, ces faisceaux qui sont réfléchis le long de la ligne (L) de manière que leur axe présente l'angle émergeant (β) par rapport à la ligne (L), le premier plan de détection (D₁) formant avec le plan de ligne (E_{L}) un premier angle de détection (ρ₁) et coupant le plan de ligne (E_{L}) le long de la ligne (L), et
- l'angle incident (α) est égal à l'angle émergeant (β) et le premier angle d'éclairage (ε₁) est égal au premier angle de détection (ρ₁).

2. Dispositif selon la revendication 1, caractérisé en ce que le dispositif d'éclairage émet la lumière (100) dans un deuxième plan d'éclairage (B₂), le plan d'éclairage (B₂) formant avec le plan de ligne (E_{L}) un deuxième angle d'éclairage (ε₂) et le dispositif (30) d'image dévie la lumière émise (100) dans le premier plan d'éclairage (B₁).

3. Dispositif selon la revendication 1, caractérisé en ce que la lumière (111) réfléchie le long de la ligne (L) dans le premier plan de détection (D₁) est déviée par le dispositif d'image (30) dans un deuxième plan de détection (D₂), le plan de détection (D₂) formant avec le plan de ligne (E_{L}) un deuxième angle de détection (ρ₂).

4. Dispositif selon la revendication 1, caractérisé en ce que le premier angle d'éclairage (ε₁) est égal au premier angle de détection (ρ₁), les deux s'élevant à à peu près 90°.

5. Dispositif selon la revendication 4, caractérisé en ce que l'angle d'incidence (α) est égal à l'angle émergeant (β) et est égal à 90° et le dispositif d'éclairage (10) est disposé dans une zone autour du dispositif de détection (50).

6. Dispositif selon la revendication 1, caractérisé en ce qu'un fractionnement de rayon (20) est prévu dans la marche des rayons (100, 101, 111, 110) entre le dispositif d'éclairage (10) et le dispositif de détection (50).

7. Dispositif selon la revendication 6, caractérisé en ce que le fractionneur de rayon (20) agit comme fractionneur de rayon polarisant.

8. Dispositif selon l'une des revendications 1 à 6, caractérisé en ce que au moins un polarisateur (52) est prévu dans la marche des rayons (100, 101, 111, 110) entre le dispositif d'éclairage (10) et le dispositif de détection (50).

9. Dispositif selon l'une des revendications 1 à 8, caractérisé en ce que au moins une plaque λ/4 (31) est prévue dans la marche des rayons (100, 101, 111, 110) entre le dispositif d'éclairage (10) et le dispositif de détection (50).

10. Dispositif selon l'une des revendications 1 à 9, caractérisé en ce que au moins un réflecteur est prévu dans la marche des rayons (100, 101, 111, 110) entre le dispositif (10) d'éclairage et le dispositif (50) de détection.

11. Dispositif selon la revendication 1, caractérisé en ce que le dispositif d'éclairage (10) émet une lumière polarisée.

12. Dispositif selon la revendication 11, caractérisé en ce que le dispositif d'éclairage (10) présente au moins une diode laser.

13. Dispositif selon la revendication 1, caractérisé en ce que le dispositif de détection (50) présente une matrice CCD.

14. Dispositif selon la revendication 1, caractérisé en ce que le dispositif de détection (50) présente une matrice de photodiode.

15. Dispositif selon la revendication 1, caractérisé en ce que la ligne (L) est plus grande que la largeur (B) de l'élément en forme de feuille (40).

16. Dispositif selon l'une des revendications 1 à 15, caractérisé en ce que l'élément en forme de feuille (40) est disposé dans le plan de ligne (E_{L}).

17. Dispositif selon l'une des revendications 1 à 15, caractérisé en ce qu'un réflecteur (33) est prévu dans le plan de ligne (E_{L}).

18. Dispositif selon la revendication 17, caractérisé en ce que le réflecteur (33) présente un haut effet Kerr.

19. Document de sécurité avec des parties constitutives à réflexion spéculaire qui présente des effets Kerr différents, caractérisé en ce que les parties constitutives sont apportées sur le document avec une encre d'imprimerie et/ou sont intégrés dans le document sous forme de fibres de sécurité.

20. Document de sécurité selon la revendication 19, caractérisé en ce que des figures et/ou des codes sont apportés dans ou sur le document avec les parties constitutives.
